# EUROPEAN PATENT SPECIFICATION

(11) **EP 1 249 087 B1**
(45) Date of publication and mention of the grant of the patent: **18.07.2007**
(21) Application number: 01921579.7
(22) Date of filing: 17.04.2001
(51) Int. Cl.: H04B 10/155, H04Q 11/00, H04J 14/08

(54) **IMPROVED DATA COMPRESSION APPARATUS AND METHOD THEREFOR**
VORRICHTUNG ZUR VERBESSERTEN DATENKOMPRESSION UND VERFAHREN DAFÜR
APPAREIL ET PROCEDE DE COMPRESSION DE DONNEES AMELIORES

(30) Priority: 18.04.2000 GB 0009449
(43) Date of publication of application: 16.10.2002
(73) Proprietor: ROKE MANOR RESEARCH LIMITED, Romsey, Hampshire SO51 0ZN (GB)
(72) Inventor: MANSBRIDGE, John, Stockbridge, Hampshire SO20 6QB (GB)
(74) Representative: French, Clive Harry
(86) International application number: PCT/GB2001/001681
(87) International publication number: WO 2001/082508

(56) References cited:
- EP-A- 0 922 992
- US-A- 5 450 225
- US-A- 5 926 297
- PATENT ABSTRACTS OF JAPAN vol. 1995, no. 08, 29 September 1995 (1995-09-29) & JP 07 123073 A (NIPPON TELEGR & TELEPH CORP), 12 May 1995 (1995-05-12)

## Description

The present invention relates to a data compression apparatus of the type used in routers for digital telecommunication systems, for example, trunk digital telecommunication systems. The present invention also relates to a method of data compression for use with the data modulator apparatus.

Trunk digital communication systems comprise a network of optical fibres carrying high-speed digital data between routing nodes. At each routing node, a stream of digital data propagated by the optical fibres is divided into packets of data which are switched to different routes on a packet-by-packet basis. The stream of digital data is switched by devices known as routers (or switches).

Typically, a router comprises 128 input ports and 128 output ports for switching 128 input data streams to 128 output data streams, currently at an operating data rate of 2.5Gb/s. A basic function of the router is to ensure that data present at all of the input ports is available at all of the output ports.

Known routers employ high-speed electronics to convert the input stream from a single, optical, data stream to a number of parallel, electronic data streams at a lower data rate. Packets of information are switched using massively parallel network of switches, the electronic data streams being converted back to a single, optical, high-speed data stream at an output port.

The next generation of trunk digital telecommunication systems will operate at 10Gb/s and will require a new generation of routers to handle such high data rates. Consequently, it has been proposed to switch the optical data streams in the optical domain, rather than converting the signals back to the electronic domain for switching. However, current optical technology cannot implement the logical operations required for routing the data packets through routers. Hence, the next generation of routers is likely to have an optical data path with conventional electronics carrying out logical operations.

One such router architecture employs a Time Division Multiplexing (TDM) technique which involves the multiplexing of all the input data streams into a single very high-speed data stream. The single very high-speed data stream is applied to all output ports of the router, each output port being arranged to select data destined for the particular output port.

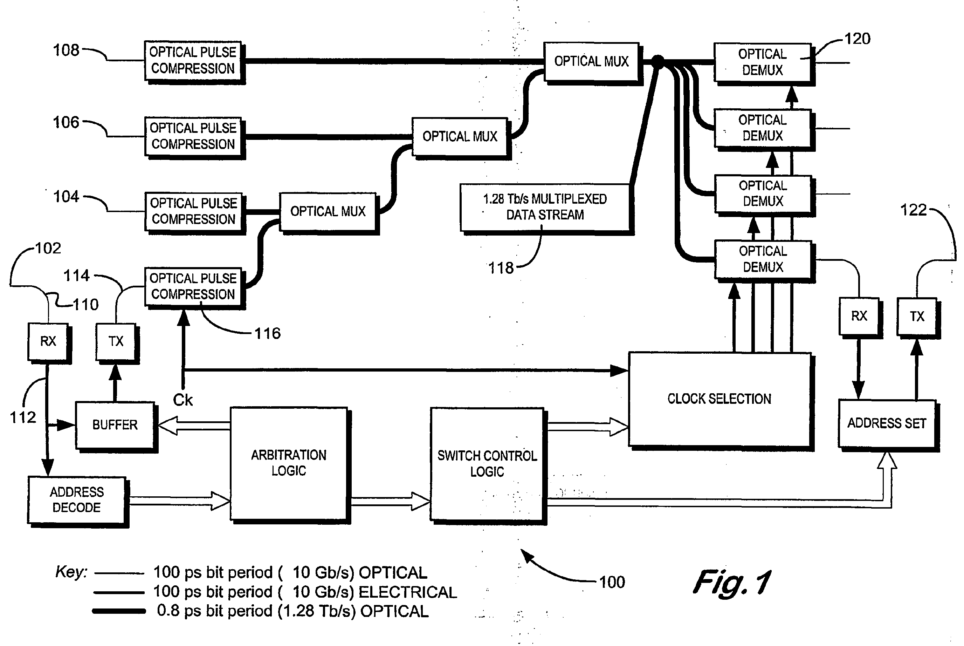

Referring to Figure 1, a known TDM router architecture is shown. For the purposes of simplicity of description and hence clarity, only four of the 128 input/output channels are shown. As described above, the router 100 comprises a first, a second, a third and a fourth input channel 102, 104, 106, 108. The first input channel 102 comprises an optical fibre 110 carrying a first input data stream (not shown) which is converted to a 10Gb/s electronic data stream 112 so that necessary routing calculations and buffering can be carried out. The buffered data bits representing the first input data stream are then converted back to an optical data stream 114. The optical data stream 114 then undergoes bit compression by optical pulse compression unit 116 so that a bit period of 100ps is transformed to a bit period of about 0.8ps. Subsequently, the very short pulses constituting the compressed data stream are multiplexed with similarly compressed pulses from other input channels, for example, the second, third and fourth input channels 104, 106, 108 to form a 1.28Tb/s aggregate serial data stream. The aggregate serial data stream is then supplied to each of a plurality of respective optical demultiplexers which are arranged to select data destined for the output ports respectively coupled to the optical demultiplexers 120, for example, a first output port 122 to which a respective first optical demultiplexer 120 is coupled.

However, the implementation of optical demultiplexers operating at 1.28Tb/s is very challenging due to the high data rate involved. Consequently, a router employing the above-described architecture is complex, bulky and costly to implement and therefore unsuitable for use in a commercial router.

US 5,450,225 discloses an optical switch using pulse compression for multiplexing.

It is therefor an object of the present invention to provide a data compression apparatus and a method therefor which obviate or at least mitigate the problems encountered when employing the above-described router architecture.

According to a first aspect of the present invention there is provided a data compression apparatus comprising a source of coherent electromagnetic radiation coupled to a pulse compressor via an optical coupler and a modulator, wherein a pulse of electromagnetic radiation generated by the source has a chirp and the modulator is arranged to modulate the pulse with continually varying data to form a modulated pulse, and the optical coupler is arranged to linearly couple the modulated pulse with a further modulated pulse, the propagation time through the pulse compressor of the linearly coupled modulated pulse being linearly dependant upon the frequency of the electromagnetic radiation constituting the modulated pulses.

Preferably, the further modulated pulse is delayed by a delay means.

Preferably, the chirp is linear.

Preferably, the continually varying data is packet data.

Preferably, the pulse compressor is a propagation medium, for example, an optical fibre. Alternatively, the pulse compressor may be a dispersive fibre grating.

Preferably, the propagation medium has controlled dispersion characteristics.

Preferably, the modulated pulse has a leading end and a lagging end, the lagging end being arranged to travel faster than the leading end of the modulated pulse. More preferably, a property of the propagation medium is such that the lagging end of the modulated pulse exiting the medium is closer to the leading end of the modulated pulse than when the modulated pulse was first launched into the medium.

Preferably, the source of electromagnetic radiation is a laser.

It is thus possible to provide optical packet compression which does not suffer from any of the above-described disadvantages.

The above described data compression apparatus may be implemented in a router. Such router may further comprise a data decompression apparatus, itself comprising a detector of electromagnetic radiation coupled to a modulator via a pulse decompressor, wherein the modulator is arranged to select a compressed modulated pulse from a stream of compressed pulses, the selected compressed modulated pulse of electromagnetic radiation propagating within the decompressor in a time linearly dependent on the frequency of the electromagnetic radiation so as to decompress the compressed modulated pulse.

According to the present invention, there is also provided a method of compressing data comprising the steps of: providing a source of coherent electromagnetic radiation capable of generating a pulse having chirp; modulating the pulse with continually varying data to form a modulated pulse; linearly coupling the modulated pulse with a further modulated pulse; and launching the linearly coupled modulated pulse into a pulse compressor, wherein the propagation time through the pulse compressor of the linearly coupled modulated pulse is linearly dependent upon the frequency of the electromagnetic radiation constituting the modulated pulses.

The method may further comprise the steps of delaying the further modulating pulse prior to the step of linearly coupling the modulated pulse.

At least one embodiment of the invention will now be described, by way of example, with reference to the accompanying drawings, in which:
Figure 2 is a schematic diagram of a router employing a data compression apparatus constituting an embodiment of the invention;
Figure 3 is a flow diagram of the operation of the router of Figure 2, and
Figures 4(a) to (f) are graphs of amplitude versus time and frequency versus time for signals present in the apparatus of Figure 2.

Throughout the description reference will be made to the optical domain, and in particular light in the optical range of the electromagnetic spectrum. It should be understood that it is intended that the term "optical range of the electromagnetic spectrum" includes frequencies in the infrared region of the electromagnetic spectrum.

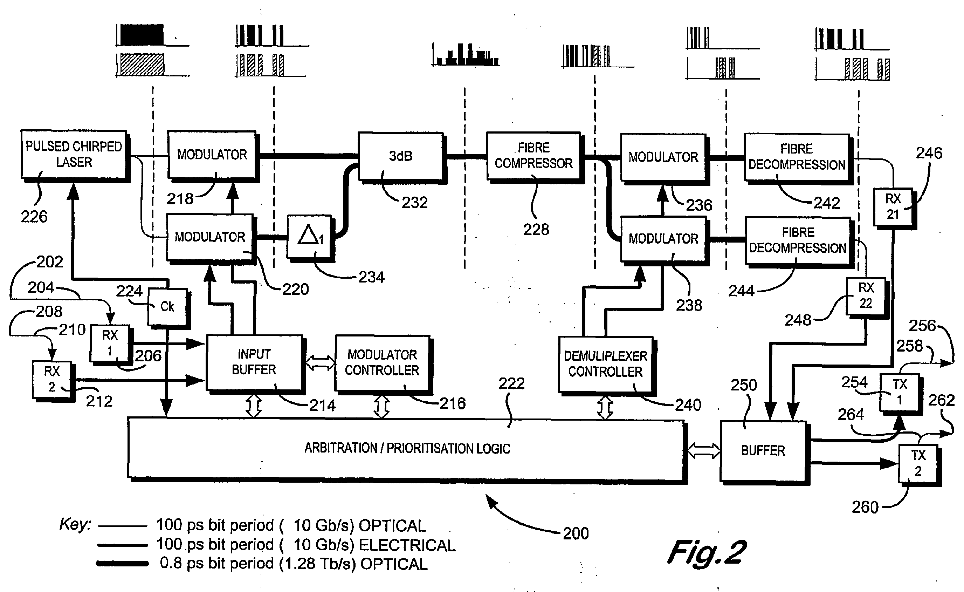

Referring to Figure 2, a router 200 comprises a plurality of input channels and a plurality of output channels. However, in the following example, only two input channels and two output channels of the router 200 will be described for the purposes of simplicity of description and hence clarity.

The router 200 has a first input channel 202 comprising a first input optical fibre 204 coupled to an input terminal of a first input receiver transducer 206. Similarly, the router 200 also has a second input channel 208 comprising a second input optical fibre 210 coupled to a second input receiver transducer 212. Both the first and second input receiver transducers 206,212 are coupled to an input buffer 214 by a 10Gb/s electrical connection. The input buffer 214 is coupled to a modulator controller 216 by means of an electrical data bus, the modulator controller 216 being coupled to a first modulator 218 and a second modulator 220 by respective 10Gb/s electrical connections. Both the input buffer 214 and the modulator controller 216 are coupled to an arbitration/prioritisation logic unit 222. A clock unit 224 is coupled to the arbitration/prioritisation logic unit 222 by a 10Gb/s electrical connection, the clock unit 224 also being connected to a pulsed chirped laser 226 by a 10Gb/s electrical connection. The pulsed chirped laser 226 is coupled to the first modulator 218 and the second modulator 220 by means of a fibre-optic splitter and a 10Gb/s optical connection.

The first modulator 218 is coupled to a 3dB coupler 232 by a 10Gb/s optical connection. The second modulator 220 is coupled to a delay unit 234, for example a predetermined length of optical fibre, by a 10Gb/s optical connection, the delay unit 234 being coupled to the 3dB coupler 232 by a 10Gb/s optical connection. The 3dB coupler 232 is coupled to a fibre compressor 228 by means of a 1.28Tb/s optical connection. The fibre compressors 228 is a transmission medium, for example an optical fibre with controlled dispersion characteristics, where the velocity of propagation through the fibre compressor 228, is linearly dependent upon the frequency of the electromagnetic radiation propagating therethrough. A first output terminal of the fibre compressor 228 is coupled to a first output modulator 236, and a second output terminal of the fibre compressor 228 is coupled to a second output modulator 238, both by respective 1.28Tb/s optical connections. The first output modulator 236 and the second output modulator 238 are both coupled to a demultiplexer controller 240 by a 10Gb/s electrical connection, the demultiplexer controller 240 being coupled to the arbitration/prioritisation logic unit 222 by an electrical data bus.

The first and second output modulators 236, 238 and the demultiplexer controller 240 operate together to select compressed packets that are destined for output channels to which the first and second output modulator 236, 238 correspond. Typically, the selection is implemented by setting the modulator 236, 238 to an 'off' state. In the 'off' state the modulator 236, 238 (attenuates) an input signal. When a packet destined for a particular output channel is due to exit the coupler 232 (taking account of any delay in the optical fibre between the coupler 232 and the modulator 236, 238) the modulator 236, 238 corresponding to the particular output channel is set to an 'on' state and the compressed packet is passed through the modulator 236, 23 8 corresponding to the output channel for which the compressed packet is destined. The modulator 236, 238 can also operate so as to divert the required compressed packet (rather than to attenuate the packet).

The first output modulator 236 is coupled to a fibre decompressor 242 by a 1.28Tb/s optical connection. The second output modulator 238 is coupled to a second fibre decompressor 244 by a 1.28Tb/s optical connection. The first fibre decompressor 242 is coupled to a first output receiver transducer 246 and the second fibre decompressor 244 is coupled to a second output receiver transducer 248, both by a 10Gb/s optical connection. The first and second output receiver transducer 246, 248 are both coupled to an output buffer 250 by a 10Gb/s electrical connection, the output buffer 250 being coupled to the arbitration/prioritisation logic unit 222 by an electrical data bus.

A first output terminal of the buffer 250 is coupled to a first output transmitter transducer 254 for onward transmission of data on a first output channel 256 by means of a first output optical fibre 258. Similarly, a second output terminal of the buffer 250 is coupled to a second output transmitter transducer 260 for onward transmission of data on the second output channel 262 by means of a second output optical fibre 264.

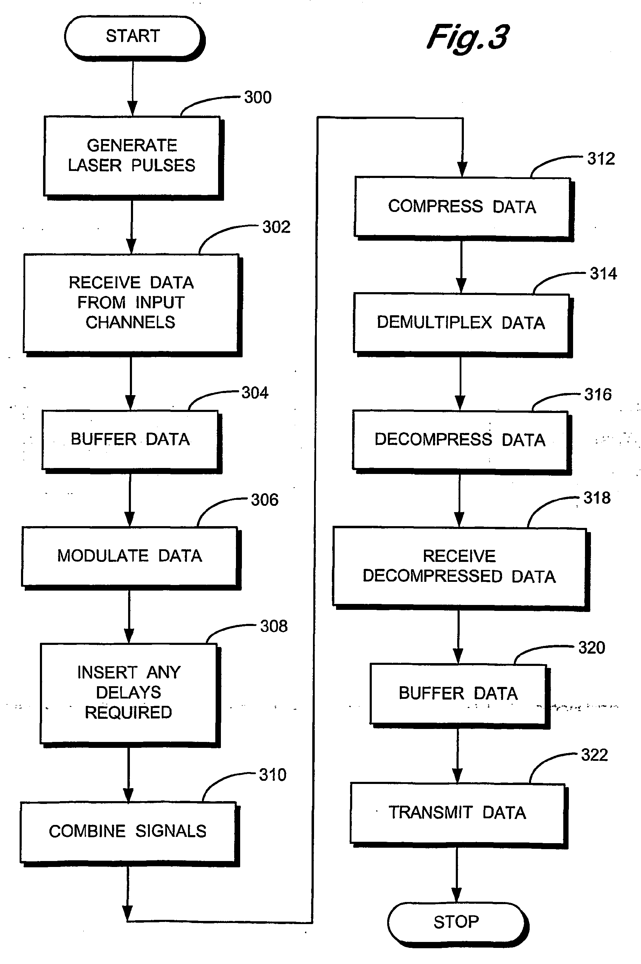

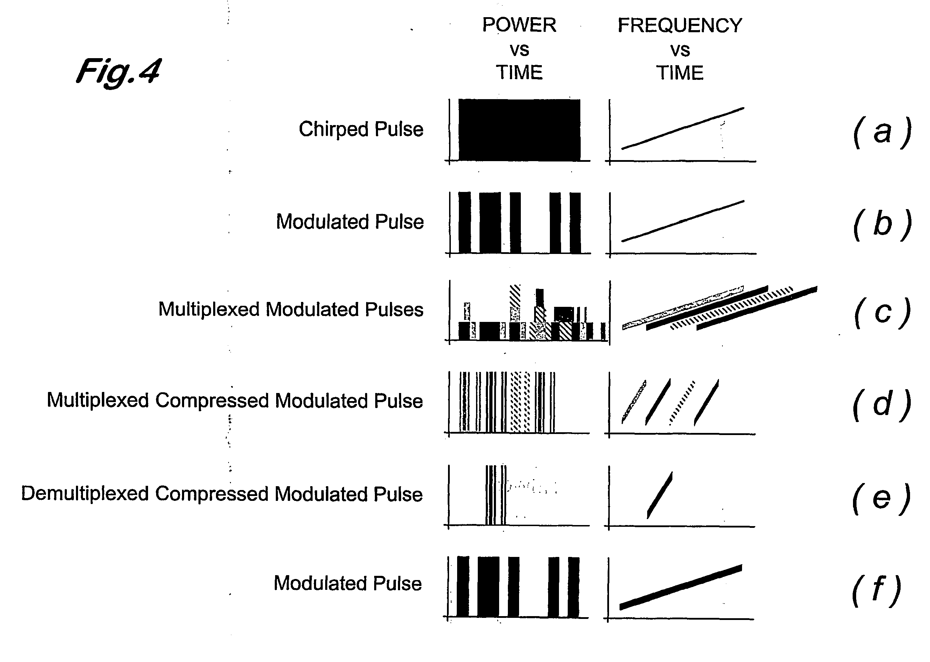

In operation (Figure 3), the laser 226 generates (step 300) a pulse having a duration corresponding to the length of a packet of data and a linear chirp, i.e. the frequency of the light increases (or decreases) with time during the pulse (Figure 4 (a)). Packets of data are received (step 302) by the first and second input receiver transducers 206, 212 corresponding to data received on the first and second input channels 202, 208. The data received (step 302) by the first and second input receiver transducer 206, 212 is transferred to the input buffer 214 for buffering (step 304). The buffered data is then transferred to the modulator controller 216 for modulation (step 306) by the first and second modulators 218, 220, the first modulator 218 modulating packet data received on the first input channel 202 and the second modulator 220 modulating data received on the second input channel 208.

Referring to Figure 4 (b), the amplitude versus the time graph shows an example of data modulated onto a chirped laser pulse, the variation of frequency with time still remaining substantially unchanged.

A delay Δ₁ is introduced (step 308) to facilitate multiplexing of data pulses. It should be noted that the delay introduced into each modulated data pulse will vary depending upon the input channel to which the modulated data pulse corresponds in order to enable the modulated data pulses to be multiplexed. The modulated data pulse generated by the first modulator 218 and the delayed modulated data pulse from the second modulator 220 and the delay unit 234 are multiplexed by the 3dB coupler 232 (step 310) to form a multiplexed modulated pulse train. Referring to Figure 4(c), it can be seen that the multiplexed data pulses are added resulting in modulated data pulses with increased power with respect to time.

The multiplexed modulated data pulse from the 3dB coupler 232 is then compressed (step 312) by the compressor unit 228. An example of a compressed multiplexed modulated pulse is shown in Figure 4 (d) where it can be seen that both amplitude and frequency have been compressed in time.

By using the compressor unit 228, as the pulse travels through the compressor, the rear of pulses travelling through the compressor units 228 travels faster than the front of the respective pulses, thereby catching-up with the front of the pulse. Consequently, a compressed multiplexed modulated data pulse exits the compressor unit 228, substantially compressed in time.

The multiplexed compressed modulated pulse train generated by the compressor unit 228 is split and sent to the first output modulator 236 and the second output modulator 238 for demultiplexing (step 314).

In this example, packets of data are compressed by a factor of 128 to yield a data rate of 1.28Tb/s. Therefore, for example, a packet containing 100 bits at 10Gb/s (having a duration of 10ns) is compressed to a bit rate of 1.28Tb/s, whereby the packet duration is 0.08ns. The data stream generated by the 3 dB coupler 232 has a data rate of 1.28Tb/s.

The first output modulator 236 and the second output modulator 238 under the control of the demultiplexer controller 240 demultiplex (step 314) the 1.28Tb/s data stream (Figure 4(e)). The demultiplexer controller 240 ensures the selection of packets of data destined for output channels to which each output modulator corresponds. Consequently, the first output modulator 236 selects packets destined for the first output channel 256 and the second output modulator 238 selects packets destined for the second output channel 262. A first compressed demultiplexed pulse is generated by the first output modulator 236 and forwarded to the first fibre decompressor 242. Similarly, the second output modulator 238 generates a second demultiplexed compressed pulse, which is forwarded to the second fibre decompressor 244. The first and second fibre decompressors 242, 244 decompress (step 316) the first demultiplexed compressed pulse and the second demultiplexed compressed pulse, respectively. The decompressed demultiplexed pulse generated by the first decompressor 242 is received by the first output receiver transducer 246 and the second demultiplexed decompressed signal is received (step 318) by the second output receiver transducer 248. The first and second output receiver transducers 246, 248 convert the optical signals received to 10Gb/s electrical signals. The signals generated by the first and second output receiver transducers 246, 248 are buffered (step 320) by the output buffer 250 before they are forwarded to the respective first output transmitter transducer 254 and the respective second output transmitter transducer 260.

The first output transmitter transducer 254 converts the received electrical signal destined for the first output channel 256 to a 10Gb/s optical signal for transmission (Step 322). Similarly, the second output transmitter transducer 260 converts the electrical signal destined for the second output channel 262 to a 10Gb/s optical signal for transmission (Step 322).

In this example, instead of routing data on a bit-by-bit basis, the data is routed on a packet-by-packet basis. Consequently, because the demultiplexer controller 240 in conjunction with the modulator 23 6, 23 8 only have to select a packet as opposed to a bit i.e. something that is 0.08ns long rather than 0.8ps long (in this example), the demodulator technology can be of a very much lower performance and the control of the modulators 236, 238 can be carried out in the electrical domain without the use of 1.28Tb/s optical clocks.

Although the above example is described in relation to the field of optical switching, the compressed optical signal can be easily converted back to the electrical domain enabling a low-speed modulator to generate a signal at a higher speed (wide bandwidth) than can be generated by the low-speed modulator itself.

Additionally, although the above described compression technique relates to the optical domain, it is envisaged that other electromagnetic waves which will propagate in an optical fibre, but are outside the optical range of the electromagnetic spectrum, can be used. However, a dispersive medium other than an optical fibre will, of course, need to be used, for example, a waveguide at microwave frequencies. Such a technique can also be applied to sound waves.

## Claims

1. A data compression apparatus comprising a source (226) of coherent electromagnetic radiation, a plurality of modulators (218,220), delay means (234), an optical coupler (232) and a pulse compressor (228), wherein a pulse of electromagnetic radiation generated by the source (226) has a chirp; each modulator (218,220) is arranged in parallel to modulate the pulse from said source (226) with continually varying data to form a modulated pulse; the delay means (234) are arranged to delay the modulated pulse at the output of each modulator (218,220); the optical coupler (232) is arranged to linearly couple the modulated pulses after the delay means (234) into the pulse compressor (228); and the propagation time through the pulse compressor (228) of the linearly coupled modulated pulse is linearly dependent upon the frequency of the electromagnetic radiation constituting the modulated pulse.

2. An apparatus as claimed in Claim 1, wherein the continually varying data is packet data.

3. An apparatus as claimed in any preceding Claim, wherein the pulse compressor is a propagation medium.

4. An apparatus as claimed in Claim 3, wherein the propagation medium has controlled dispersion characteristics.

5. An apparatus as claimed in any preceding Claim, wherein the modulated pulse has a leading end and a lagging end, the lagging end being arranged to travel faster than the leading end of the modulated pulse.

6. An apparatus as claimed in Claim 5, when dependent upon Claim 3, wherein a property of the propagation medium is such that the lagging end of the modulated pulse exiting the medium is closer to the leading end of the modulated pulse than when the modulated pulse was launched into the medium.

7. An apparatus as claimed in any one of Claims 3 to 6, wherein the propagation material is an optical fibre.

8. An apparatus as claimed in any one of the preceding claims, wherein the source of electromagnetic radiation is a laser.

9. An apparatus as claimed in any one of the preceding claims, wherein the chirp is linear.

10. An apparatus as claimed in any of Claims 1 and 2 wherein the pulse compressor is a dispersive fibre grating.

11. A router comprising data compression apparatus as claimed in any one of the preceding claims.

12. A router according to claim 11, further comprising data decompression apparatus, itself comprising a detector of electromagnetic radiation coupled to a modulator via a pulse decompressor, wherein the modulator is arranged to select a compressed modulated pulse from a stream of compressed pulses, the selected compressed modulated pulse of electromagnetic radiation propagating within the decompressor in a time linearly dependent upon the frequency of the electromagnetic radiation so as to decompress the compressed modulated pulse.

13. A method of compressing data comprising the steps of:
providing a source of coherent electromagnetic radiation capable of
generating a pulse having chirp (300);
modulating the pulse by a plurality of modulators in parallel with continually varying data to form a modulated pulse at the output of each modulator (306);
delaying the modulated pulses prior to linearly coupling them (308);
linearly coupling the modulated pulses (310); and
launching the linearly coupled modulated pulses into a pulse compressor (312), wherein the propagation time through the pulse compressor of the linearly coupled modulated pulses is linearly dependent upon the frequency of the electromagnetic radiation constituting the modulated pulses.

## Patentansprüche

1. Vorrichtung zur Datenkompression, bestehend aus einer Quelle (226) kohärenter elektromagnetischer Strahlung, mehreren Modulatoren (218, 220), einem Verzögerungsmittel (234), einem Optokoppler (232) und einem Impulskompressor (228), bei der ein Impuls elektromagnetischer Strahlung, der von der Quelle (226) generiert wird, eine Chirp-Charakteristik aufweist; die Modulatoren (218, 220) parallel angeordnet sind, um den Impuls von der besagten Quelle (226) mit kontinuierlich wechselnden Daten zu modulieren und auf diese Weise einen modulierten Impuls zu bilden; das Verzögerungsmittel (234) so ausgelegt ist, dass es den modulierten Impuls am Ausgang jedes Modulators (218, 220) verzögert; der Optokoppler (232) so ausgelegt ist, dass er die modulierten Impulse nach dem Verzögerungsmittel (234) linear in den Impulskompressor (228) einkoppelt; und die Laufzeit durch den Impulskompressor (228) des linear gekoppelten modulierten Impulses in linearer Abhängigkeit zur Frequenz der elektromagnetischen Strahlung steht, welche den modulierten Impuls ausmacht.

2. Vorrichtung gemäß Anspruch 1, bei der die kontinuierlich wechselnden Daten als Paketdaten ausgeführt sind.

3. Vorrichtung gemäß einem der vorstehenden Ansprüche, bei der der Impulskompressor als Ausbreitungsmedium ausgeführt ist.

4. Vorrichtung gemäß Anspruch 3, bei der das Ausbreitungsmedium kontrollierte Dispersionseigenschaften aufweist.

5. Vorrichtung gemäß einem der vorstehenden Ansprüche, bei der der modulierte Impuls über ein führendes Ende und ein nacheilendes Ende verfügt, wobei das nacheilende Ende so ausgeführt ist, dass es sich schneller fortbewegt als das führende Ende des modulierten Impulses .

6. Vorrichtung gemäß Anspruch 5, sofern dieser von Anspruch 3 abhängig ist, bei der eine Eigenschaft des Ausbreitungsmediums darin besteht, dass sich das nacheilende Ende des modulierten Impulses beim Austritt aus dem Medium näher am führenden Ende des modulierten Impulses befindet als zu dem Zeitpunkt, als der modulierte Impuls erstmalig in das Medium eingekoppelt wurde.

7. Vorrichtung gemäß einem der vorstehenden Ansprüche 3 bis 6, bei der das Ausbreitungsmedium als Lichtwellenleiter ausgeführt ist.

8. Vorrichtung gemäß einem der vorstehenden Ansprüche, bei der die Quelle elektromagnetischer Strahlung als Laser ausgeführt ist.

9. Vorrichtung gemäß einem der vorstehenden Ansprüche, bei der der Chirp eine lineare Charakteristik aufweist.

10. Vorrichtung gemäß einem der Ansprüche 1 und 2, bei der der Impulskompressor als dispersives Fasergitter ausgeführt ist.

11. Router mit einer Vorrichtung zur Datenkompression gemäß einem der vorstehenden Ansprüche.

12. Router gemäß Anspruch 11, der ferner eine Vorrichtung zur Datendekompression umfasst, die wiederum einen Detektor für elektromagnetische Strahlung umfasst, der über einen Impulsdekompressor an einen Modulator gekoppelt ist, wobei der Modulator so ausgeführt ist, dass er einen komprimierten modulierten Impuls aus einem Strom von komprimierten Impulsen auswählt und sich der ausgewählte komprimierte modulierte Impuls elektromagnetischer Strahlung innerhalb des Dekompressors in einer Zeit ausbreitet, die in linearer Abhängigkeit zu der Frequenz der elektromagnetischen Strahlung steht, so dass der komprimierte modulierte Impuls dekomprimiert wird.

13. Verfahren zur Kompression von Daten, das folgende Schritte umfasst :
Bereitstellung einer Quelle kohärenter elektromagnetischer Strahlung, die in der Lage ist, einen Impuls mit Chirp-Charakteristik zu generieren (300);
Modulation des Impulses durch mehrere parallele Modulatoren mit kontinuierlich wechselnden Daten, um auf diese Weise einen modulierten Impuls am Ausgang jedes Modulators (306) zu bilden;
Verzögerung der modulierten Impulse (308), bevor diese Impulse linear gekoppelt werden;
lineare Kopplung der modulierten Impulse (310); und
Einkopplung der linear gekoppelten modulierten Impulse in einen Impulskompressor (312), wobei die Laufzeit der linear gekoppelten modulierten Impulse durch den Impulskompressor in linearer Abhängigkeit steht zur Frequenz der elektromagnetischen Strahlung, welche die modulierten Impulse ausmacht.

## Revendications

1. Appareil de compression de données comprenant une source (226) de rayonnement électromagnétique cohérent, une pluralité de modulateurs (218, 220), des moyens de retard (234), un coupleur optique (232) et un compresseur d'impulsions (228), dans lequel une impulsion de rayonnement électromagnétique générée par la source (226) présente une dérive de fréquence ; chaque modulateur (218, 220) est agencé en parallèle de manière à moduler l'impulsion provenant de ladite source (226) avec des données à variation continue afin de former une impulsion modulée ; les moyens de retard (234) sont agencés de manière à retarder l'impulsion modulée à la sortie de chaque modulateur (218, 220) ; le coupleur optique (232) est agencé de manière à coupler linéairement les impulsions modulées après les moyens de retard (234) jusque dans le compresseur d'impulsions (228) ; et le temps de propagation à travers le compresseur d'impulsions (228) de l'impulsion modulée couplée linéairement varie linéairement en fonction de la fréquence du rayonnement électromagnétique constituant l'impulsion modulée.

2. Appareil selon la revendication 1, dans lequel les données à variation continue sont des données en paquets.

3. Appareil selon une quelconque revendication précédente, dans lequel le compresseur d'impulsions est un support de propagation.

4. Appareil selon la revendication 3, dans lequel le support de propagation présente des caractéristiques de dispersion régulées.

5. Appareil selon une quelconque revendication précédente, dans lequel l'impulsion modulée possède un front avant et un front arrière, le front arrière étant agencé de façon à se déplacer plus vite que le front avant de l'impulsion modulée.

6. Appareil selon la revendication 5 lorsqu'elle dépend de la revendication 3, dans lequel une propriété du support de propagation est telle que le front arrière de l'impulsion modulée sortant du support est plus proche du front avant de l'impulsion modulée que lorsque l'impulsion modulée a été injectée dans le support.

7. Appareil selon l'une quelconque des revendications 3 à 6, dans lequel le matériau de propagation est une fibre optique.

8. Appareil selon l'une quelconque des précédentes revendications, dans lequel la source de rayonnement électromagnétique est un laser.

9. Appareil selon l'une quelconque des précédentes revendications, dans lequel la dérive de fréquence est linéaire.

10. Appareil selon la revendication 1 ou 2, dans lequel le compresseur d'impulsions est un réseau de fibres dispersives.

11. Routeur comprenant un appareil de compression de données selon l'une quelconque des précédentes revendications.

12. Routeur selon la revendication 11, comprenant en outre un appareil de décompression de données comprenant lui-même un détecteur de rayonnement électromagnétique couplé à un modulateur via un décompresseur d'impulsions, dans lequel le modulateur est agencé de façon à sélectionner une impulsion modulée compressée parmi un flux d'impulsions compressées, l'impulsion modulée compressée sélectionnée du rayonnement électromagnétique se propageant à l'intérieur du décompresseur en un temps variant linéairement en fonction de la fréquence du rayonnement électromagnétique de manière à décompresser l'impulsion modulée compressée.

13. Procédé de compression de données comprenant les étapes consistant à :
préparer une source de rayonnement électromagnétique cohérent capable de générer une impulsion à dérive de fréquence (300) ;
moduler l'impulsion, à l'aide d'une pluralité de modulateurs en parallèle, avec des données à variation continue de façon à former une impulsion modulée à la sortie de chaque modulateur (306) ;
retarder les impulsions modulées avant de les coupler linéairement (308) ;
coupler linéairement les impulsions modulées (310) ; et
injecter les impulsions modulées couplées linéairement dans un compresseur d'impulsions (312), dans lequel le temps de propagation à travers le compresseur d'impulsions des impulsions modulées couplées linéairement varie linéairement en fonction de la fréquence du rayonnement électromagnétique constituant les impulsions modulées.
